# EUROPÄISCHE PATENTSCHRIFT

(11) **EP 4 578 621 B1**
(45) Veröffentlichungstag und Bekanntmachung des Hinweises auf die Patenterteilung: **13.05.2026**
(21) Anmeldenummer: 24219349.8
(22) Anmeldetag: 12.12.2024
(51) Int. Cl.: B29C 45/14, B44C 5/04, B60R 13/04, F21S 43/50, B29C 45/00, B44F 1/06, B60Q 1/26, B29C 45/16

(54) **VERFAHREN ZUR HERSTELLUNG EINES PARTIELL DURCHLEUCHTBAREN AUSSENVERKLEIDUNGSTEILS FÜR EIN FAHRZEUG**
METHOD FOR PRODUCING A PARTIALLY TRANSLUCENT OUTER TRIM PART FOR A VEHICLE
PROCÉDÉ DE FABRICATION D'UN ÉLÉMENT DE GARNITURE EXTÉRIEURE PARTIELLEMENT TRANSPARENT POUR UN VÉHICULE

(30) Priorität: 28.12.2023 DE 102023136758
(43) Veröffentlichungstag der Anmeldung: 02.07.2025
(73) Patentinhaber: RESRG Automotive SE & Co. KG, 95111 Rehau (DE)
(72) Erfinder: Beyerlein, Patrick, 95111 Rehau (DE); Friese, Dominik, 95111 Rehau (DE); Jäger, Christoph, 95111 Rehau (DE); Kätzel, Patrick, 95111 Rehau (DE); Leister, Christian, 95030 Hof (DE)
(74) Vertreter: Grünecker Patent- und Rechtsanwälte PartG mbB

(56) Entgegenhaltungen:
- EP-A1- 3 572 282
- EP-A1- 3 733 457
- EP-A1- 4 019 338
- EP-A1- 4 112 267
- WO-A1-2020/053368
- WO-A1-2023/017071
- DE-A1- 102010 053 740
- DE-A1- 102018 128 194
- US-A- 6 126 877
- US-A1- 2013 214 450

## Beschreibung

Die vorliegende Erfindung betrifft ein Verfahren zur Herstellung eines partiell durchleuchtbaren Außenverkleidungsteils für ein Fahrzeug.

Es sind eine Vielzahl von Herstellungsverfahren für derartige Außenverkleidungsteile bekannt. Hierzu sei nur beispielhaft auf die Dokumente DE 10 2020 000 921 A1, DE 10 2017 214 943 A1, DE 10 2020 105 729 A1, DE 10 2021 134 475 A1, DE 10 2020 134 132 A1 oder EP 3 632 749 A1 verwiesen.

EP 4 019 338 A1 offenbart ein Verfahren zur Herstellung eines partiell durchleuchtbaren Außenverkleidungsteils. Dabei wird auf der Außenseite eine Kaschierfolie angeordnet, die den Übergangsbereich zwischen Grundkörper und Lichtfenster überdeckt. Die Folie wird in das für ein Mehrkomponenten-Spritzgussverfahren ausgelegte Spritzgusswerkzeug eingelegt und anschließend sowohl vom Material des Lichtfensters als auch vom Material des Grundkörpers hinterspritzt. In einem nachfolgenden Schritt wird auf der Außenseite, zumindest im Bereich des Lichtfensters, eine ein- oder mehrschichtige Beschichtung aufgebracht, beispielsweise eine Lackschicht oder Lackfolie. Zur Realisierung der partiellen Durchleuchtung ist die Beschichtung vollständig perforiert. Über der perforierten Beschichtung wird eine Klarlackschicht aufgebracht, welche sowohl die Beschichtung als auch die Perforationen versiegelt. Aus der WO 2023/017071 A1 ist ebenfalls ein Verfahren zur Herstellung eines partiell durchleuchtbaren Außenverkleidungsteils bekannt. Hierzu wird eine perforierte farbige Folie mit einer Trägerschicht, insbesondere einer Kunststofffolie, sowie einer pigmentierten bzw. farbgebenden Schicht, insbesondere einer Lackschicht, in das Spritzgusswerkzeug eingelegt und hinterspritzt. Die Folie wird so positioniert, dass die Trägerschicht an der Werkzeugwand und die farbgebende Schicht an der Kunststoffschmelze anliegt. 1

DE 10 2010 053740 A1 beschreibt das Hinterspritzen eines dekorativen Elements in Form eines Metallblechs oder einer Folie, das eine Haftschicht trägt, welche beim Hinterspritzen mit der Kunststoffschmelze in Kontakt kommt. Die EP 3 572 282 A1 zeigt das Hinterspritzen einer Folie mit einer Spiegelschicht, die ebenfalls direkt mit der Kunststoffschmelze in Kontakt gebracht wird. Die EP 4 112 267 A1 betrifft das Hinterspritzen einer Lacktransferfolie. Nach dem Hinterspritzen wird die Trägerfolie entfernt, sodass nur die übertragene Lackschicht auf dem Kunststoffteil verbleibt. Nach der WO 2020/053368 A1 werden Blindöffnungen in einem Kunststoffbauteil zunächst mit einer Grundierung und anschließend mit einem Farbauftrag versehen. Darüber wird eine Klarlackschicht aufgebracht, die sowohl den Farbauftrag als auch direkt die Außenfläche abdeckt, sofern diese nicht perforiert ist. 1

Aufgabe der vorliegenden Erfindung ist es ein alternatives Verfahren zur Herstellung eines Außenverkleidungsteils anzugeben.

Diese Aufgabe wird vorliegend gelöst durch ein Verfahren zur Herstellung eines partiell durchleuchtbaren Außenverkleidungsteils für ein Fahrzeug, wobei das Außenverkleidungsteil einen Grundkörper aufweist, umfassend die folgenden Schritte:
- Bereitstellen einer Farbfolie, die wenigstens eine Trägerfolie aus einem für sichtbares Licht transparenten oder transluzenten Kunststoffmaterial und eine auf der Trägerfolie angeordnete, lichtundurchlässige und farbgebende Schicht aufweist,
- Einbringen einer Vielzahl von Perforationen in die Farbfolie, wobei die Perforationen die Trägerfolie und die Farbschicht vollständig durchdringen, um hierdurch eine partielle Durchleuchtbarkeit der Farbfolie zu ermöglichen,
- Einlegen der Farbfolie in ein Spritzgusswerkzeug, das wenigstens zwei Werkzeugformhälften aufweist, die im geschlossenen Zustand zwischen sich eine den Grundkörper definierende Kavität ausbilden, wobei die farbgebende Schicht der Farbfolie an der Innenwand einer der Werkzeugformhälften anliegt oder der Innenwand einer der Werkzeugformhälften gegenüberliegt,
- Einspritzen eines den Grundkörper bildenden ersten plastifizierten Kunststoffmaterials in die Kavität, wobei das erste plastifizierte Kunststoffmaterial aus einem für sichtbares Licht transparenten oder transluzenten Kunststoffmaterial besteht, und Einspritzen eines ebenfalls den Grundkörper bildenden zweiten plastifizierten Kunststoffmaterials in die Kavität, wobei die plastifizierten Kunststoffmaterialien so eingespritzt werden, dass die Farbfolie an sich voneinander unterscheidenden Bereichen von dem ersten und von dem zweiten plastifizierten Kunststoffmaterial hinterspritzt wird und sich die beiden Kunststoffmaterialien hierbei mit der Trägerfolie der Farbfolie verbinden, wobei die plastifizierten Kunststoffmaterialien gezielt so eingespritzt werden, dass nur das erste plastifizierte Kunststoffmaterial in die Perforationen der Farbfolie gedrückt wird und dort Teilbereiche des Grundkörpers bildet,
- Aufbringen einer die Farbfolie und die Teilbereiche versiegelnden Versiegelungsschicht aus einem transparenten oder transluzenten Kunststoffmaterial.

Das Einbringen der Perforationen in die Farbfolie kann beispielsweise durch Stanzen, insbesondere durch Feinstanzen, oder durch Wasserstrahlschneiden oder durch Laserstrahlschneiden oder durch Plasmastrahlschneiden oder durch Bohren oder durch Schneiden mit einem Messer erfolgen.

Das Kunststoffmaterial der Trägerfolie der Farbfolie kann bevorzugt Polypropylen umfassen oder aus Polypropylen bestehen.

Das erste Kunststoffmaterial des Grundkörpers kann ein transparentes oder transluzentes Polypropylen umfassen oder aus einem transparenten oder transluzenten Polypropylen bestehen. Das zweite Kunststoffmaterial des Grundkörpers kann ein gegenüber dem ersten Kunststoffmaterial verstärktes Polypropylen umfassen oder aus einem gegenüber dem ersten Kunststoffmaterial verstärkten und/oder eingefärbten Polypropylen bestehen. Die Verstärkung kann insbesondere durch Zugabe von Partikeln, Flakes oder Fasern erfolgen. Verstärkungsmaterialien können insbesondere Talkum, Russ oder Glas in Partikelform, Flakesform oder Faserform sein.

Die Versiegelungsschicht kann bevorzugt Polyurethan umfassen oder aus Polyurethan bestehen.

Die Farbfolie kann in einer Variante des Verfahrens wenigstens einen Heizdraht oder wenigstens einen Antennendraht oder wenigstens eine elektrische Schaltung oder wenigstens eine Leuchtdiode aufweisen. Alternativ oder ergänzend kann als Variante wenigstens eine zusätzliche Funktionsfolie vorgesehen sein, die mit der Farbfolie und/oder mit dem Grundkörper verbunden ist, wobei die Funktionsfolie wenigstens einen Heizdraht oder wenigstens einen Antennendraht oder wenigstens eine elektrische Schaltung oder wenigstens eine Leuchtdiode aufweist.

Der Grundkörper weist bevorzugt eine Wandstärke im Bereich von 0,8 mm bis 5,5 mm, vorzugsweise im Bereich von 1,3 mm bis 2,8 mm auf.

Das Aufbringen der Versiegelungsschicht kann bevorzugt in einem Spritzgussverfahren (gegebenenfalls in demselben Spritzgusswerkzeug wie der Grundkörper) oder durch ein Flutungsverfahren oder durch ein Tauchverfahren oder durch ein Reaction Injection Moulding-Verfahren (RIM) erfolgen.

Das Außenverkleidungsteil kann beispielsweise eine Stoßfängerverkleidung oder eine Türaußenverkleidung oder eine Heckklappenaußenverkleidung oder eine Kotflügelverkleidung oder ein Frontpanel oder eine Kühlerverkleidung oder eine Schwellerverkleidung oder ein Spoiler, oder ein Bestandteil einer Stoßfängerverkleidung oder einer Türaußenverkleidung oder einer Heckklappenaußenverkleidung oder einer Kotflügelverkleidung oder eines Frontpanel oder einer Kühlerverkleidung oder einer Schwellerverkleidung oder eines Spoilers sein. Ein Frontpanel ist derjenige Teil eines Fahrzeugs an deren Stelle sich bei Verbrennungsfahrzeugen der Kühlergrill befunden hat. Insbesondere bei Elektrofahrzeugen ist dieses Frontpanel nicht mehr als Lufteinlass zu dem Kühler (den es hier nicht mehr gibt) ausgebildet, sondern als Designelement in der Fahrzeugmitte vorgesehen.

Das sichtbare Licht, auch als Licht- oder Farbspektrum bezeichnet, ist der Teil des elektromagnetischen Spektrums, den das menschliche Auge wahrnehmen kann. Es reicht von Rot (etwa 760 nm) bis Violett (etwa 380 nm). Vorliegend bedeutet der Begriff "aus einem für sichtbares Licht transparenten oder transluzenten Kunststoffmaterial", dass wenigstens eine Wellenlänge - aber nicht zwingend alle Wellenlängen - aus dem Licht- oder Farbspektrum das Kunststoffmaterial passieren kann.

Ein Material wird als transparent bezeichnet, wenn es von Licht im sichtbaren Bereich durchdrungen werden kann. Ein Element mit einem Transmissionsgrad von bis etwa 90% gilt noch als transparent. Ein Element wird als transluzent bezeichnet, wenn es von Licht im sichtbaren Bereich durchdrungen wird, dabei aber keine klare Unterscheidung von Objekten mehr zulässt, die sich hinter dem Element befinden. Ein Element mit einem Transmissionsgrad bis etwa 30% gilt noch als transluzent. Der Transmissionsgrad eines Materials bzw. Bauteils ist der Anteil des Lichtstroms, der durch das Material bzw. Bauteil hindurchgeht. Der Transmissionsgrad ist also das Verhältnis der vom Material oder dem Bauteil durchgelassenen Lichtintensität zur einfallenden Lichtintensität und nimmt Werte zwischen 0% und 100% an.

### Ausführungsbeispiele

Im Folgenden wird die Erfindung anhand lediglich Ausführungsbeispiele darstellender Zeichnungen erläutert. Es zeigen schematisch:

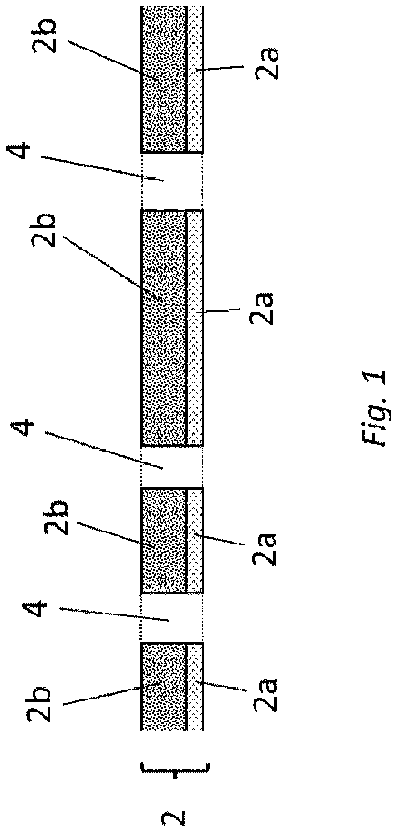

- Fig. 1-4: schematische Darstellungen der einzelnen Verfahrensschritte des erfindungsgemäßen Verfahrens.

In den Figuren werden gleiche oder funktionsgleiche Elemente mit den gleichen Bezugszeichen versehen.

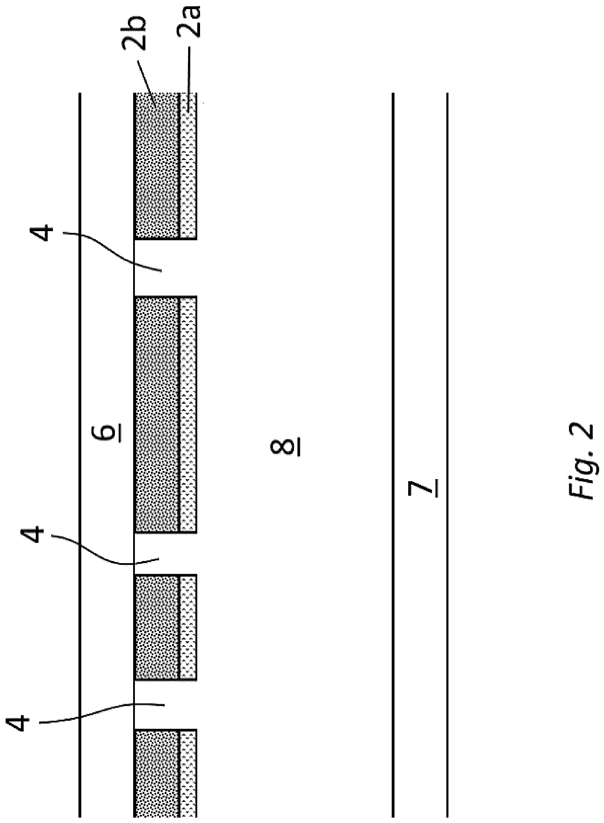

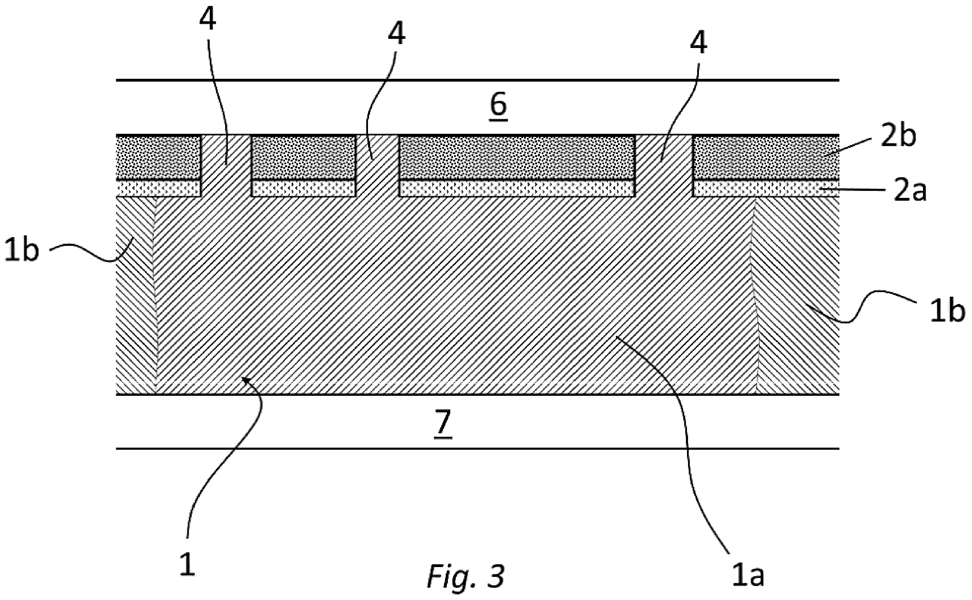

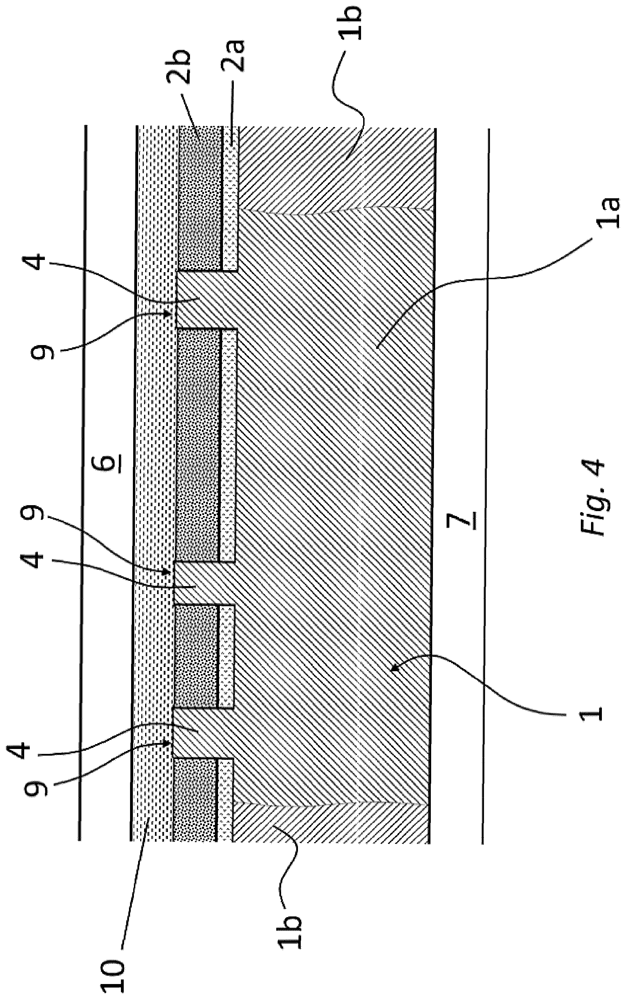

Die nachfolgenden Abbildungen zeigen stark schematisierte Querschnitte durch die verschiedenen Stufen eines Außenverkleidungsteils während dessen Herstellung. Das Verfahren zur Herstellung eines partiell durchleuchtbaren Außenverkleidungsteils für ein Fahrzeug, wobei das Außenverkleidungsteil einen Grundkörper 1 aufweist, umfasst die folgenden Schritte:
- Bereitstellen einer Farbfolie 2, die wenigstens eine Trägerfolie 2a aus einem für sichtbares Licht transparenten oder transluzenten Kunststoffmaterial und eine auf der Trägerfolie 2a angeordnete, lichtundurchlässige und farbgebende Schicht 2b aufweist (hier nicht näher dargestellt),
- Einbringen einer Vielzahl von Perforationen 4 in die Farbfolie 2, wobei die Perforationen die Trägerfolie 2a und die Farbschicht 2b vollständig durchdringen, um hierdurch eine partielle Durchleuchtbarkeit der Farbfolie 2 zu ermöglichen (vgl. Fig. 1),
- Einlegen der Farbfolie 5 in ein Spritzgusswerkzeug, das wenigstens zwei Werkzeugformhälften 6, 7 aufweist, die im geschlossenen Zustand zwischen sich eine den Grundkörper 1 definierende Kavität 8 ausbilden, wobei die farbgebende Schicht 2b der Farbfolie 2 an der Innenwand einer der Werkzeugformhälften 6 anliegt oder der Innenwand einer der Werkzeugformhälften 6 gegenüberliegt (vgl. Fig. 2),
- Einspritzen eines den Grundkörper 1 bildenden ersten plastifizierten Kunststoffmaterials 1a in die Kavität 8, wobei das erste plastifizierte Kunststoffmaterial 1a aus einem für sichtbares Licht transparenten oder transluzenten Kunststoffmaterial besteht, und Einspritzen eines ebenfalls den Grundkörper 1 bildenden zweiten plastifizierten Kunststoffmaterials 1b in die Kavität 8, wobei die plastifizierten Kunststoffmaterialien 1a, 1b so eingespritzt werden, dass die Farbfolie 2 an sich voneinander unterscheidenden Bereichen von dem ersten und von dem zweiten plastifizierten Kunststoffmaterial 1a, 1b hinterspritzt wird und sich die beiden Kunststoffmaterialien 1a, 1b hierbei mit der Trägerfolie 2a der Farbfolie 2 verbinden, wobei die plastifizierten Kunststoffmaterialien 1a, 1b gezielt so eingespritzt werden, dass nur das erste plastifizierte Kunststoffmaterial 1a in die Perforationen 4 der Farbfolie 2 gedrückt wird und dort Teilbereiche (9) des Grundkörpers 1 bildet (vgl. Fig. 3),
- Aufbringen einer die Farbfolie 2 und die Teilbereiche 9 versiegelnden Versiegelungsschicht 10 aus einem transparenten oder transluzenten Kunststoffmaterial (vgl. Fig. 4).

Das Einbringen der Perforationen 4 in die Farbfolie 2 kann durch Stanzen, insbesondere durch Feinstanzen, oder durch Wasserstrahlschneiden oder durch Laserstrahlschneiden oder durch Plasmastrahlschneiden oder durch Bohren oder durch Schneiden mit einem Messer erfolgen.

Das Kunststoffmaterial der Trägerfolie 2a der Farbfolie 2 umfasst Polypropylen oder besteht aus Polypropylen.

Das erste Kunststoffmaterial 1a des Grundkörpers 1 umfasst ein transparentes oder transluzentes Polypropylen oder besteht aus einem transparenten oder transluzenten Polypropylen.

Das zweite Kunststoffmaterial 1b des Grundkörpers 1 umfasst ein gegenüber dem ersten Kunststoffmaterial 1a verstärktes Polypropylen oder besteht aus einem gegenüber dem ersten Kunststoffmaterial 1a verstärkten Polypropylen.

Die Versiegelungsschicht 10 umfasst Polyurethan oder besteht aus Polyurethan.

Die Farbfolie 2 kann wenigstens einen Heizdraht oder wenigstens einen Antennendraht oder wenigstens eine elektrische Schaltung oder wenigstens eine Leuchtdiode aufweisen oder, es kann wenigstens eine zusätzliche Funktionsfolie vorgesehen sein, die mit der Farbfolie 2 und/oder mit dem Grundkörper 1 verbunden ist, wobei die Funktionsfolie wenigstens einen Heizdraht oder wenigstens einen Antennendraht oder wenigstens eine elektrische Schaltung oder wenigstens eine Leuchtdiode aufweist (hier nicht näher dargestellt).

Das Aufbringen der Versiegelungsschicht 10 erfolgt vorliegend in einem Spritzgussverfahren in demselben Spritzgusswerkzeug. Alternativ kann das Aufbringen durch ein Flutungsverfahren oder durch ein Tauchverfahren oder durch ein Reaction Injection Moulding-Verfahren (RIM) erfolgen.

Das Außenverkleidungsteil kann eine Stoßfängerverkleidung oder eine Türaußenverkleidung oder eine Heckklappenaußenverkleidung oder eine Kotflügelverkleidung oder ein Frontpanel oder eine Kühlerverkleidung, oder eine Schwellerverkleidung oder ein Spoiler oder ein Bestandteil einer Stoßfängerverkleidung oder einer Türaußenverkleidung oder einer Heckklappenaußenverkleidung oder einer Kotflügelverkleidung oder eines Frontpanels oder einer Kühlerverkleidung oder einer Schwellerverkleidung oder eines Spoilers sein.

## Patentansprüche

1. Verfahren zur Herstellung eines partiell durchleuchtbaren Außenverkleidungsteils für ein Fahrzeug, wobei das Außenverkleidungsteil einen Grundkörper (1) aufweist, umfassend die folgenden Schritte:
- Bereitstellen einer Farbfolie (2), die wenigstens eine Trägerfolie (2a) aus einem für sichtbares Licht transparenten oder transluzenten Kunststoffmaterial und eine auf der Trägerfolie (2a) angeordnete, lichtundurchlässige und farbgebende Schicht (2b) aufweist,
- Einbringen einer Vielzahl von Perforationen (4) in die Farbfolie (2), wobei die Perforationen die Trägerfolie (2a) und die Farbschicht (2b) vollständig durchdringen, um hierdurch eine partielle Durchleuchtbarkeit der Farbfolie (2) zu ermöglichen,
- Einlegen der Farbfolie (5) in ein Spritzgusswerkzeug, das wenigstens zwei Werkzeugformhälften (6, 7) aufweist, die im geschlossenen Zustand zwischen sich eine den Grundkörper (1) definierende Kavität (8) ausbilden, wobei die farbgebende Schicht (2b) der Farbfolie (2) an der Innenwand einer der Werkzeugformhälften (6) anliegt oder der Innenwand einer der Werkzeugformhälften (6) gegenüberliegt,
- Einspritzen eines den Grundkörper (1) bildenden ersten plastifizierten Kunststoffmaterials (1a) in die Kavität (8), wobei das erste plastifizierte Kunststoffmaterial (1a) aus einem für sichtbares Licht transparenten oder transluzenten Kunststoffmaterial besteht, und Einspritzen eines ebenfalls den Grundkörper (1) bildenden zweiten plastifizierten Kunststoffmaterials (1b) in die Kavität (8), wobei die plastifizierten Kunststoffmaterialien (1a, 1b) so eingespritzt werden, dass die Farbfolie (2) an sich voneinander unterscheidenden Bereichen von dem ersten und von dem zweiten plastifizierten Kunststoffmaterial (1a, 1b) hinterspritzt wird und sich die beiden Kunststoffmaterialien (1a, 1b) hierbei mit der Trägerfolie (2a) der Farbfolie (2) verbinden, wobei die plastifizierten Kunststoffmaterialien (1a, 1b) gezielt so eingespritzt werden, dass nur das erste plastifizierte Kunststoffmaterial (1a) in die Perforationen (4) der Farbfolie (2) gedrückt wird und dort Teilbereiche (9) des Grundkörpers (1) bildet,
- Aufbringen einer die Farbfolie (2) und die Teilbereiche (9) versiegelnden Versiegelungsschicht (10) aus einem transparenten oder transluzenten Kunststoffmaterial.

2. Verfahren nach Anspruch 1, **dadurch gekennzeichnet, dass** das Einbringen der Perforationen (4) in die Farbfolie (2) durch Stanzen, insbesondere durch Feinstanzen, oder durch Wasserstrahlschneiden oder durch Laserstrahlschneiden oder durch Plasmastrahlschneiden oder durch Bohren oder durch Schneiden mit einem Messer erfolgt.

3. Verfahren nach Anspruch 1 oder 2, **dadurch gekennzeichnet, dass** das Kunststoffmaterial der Trägerfolie (2a) der Farbfolie (2) Polypropylen umfasst oder aus Polypropylen besteht.

4. Verfahren nach einem der vorstehenden Ansprüche, **dadurch gekennzeichnet, dass** das erste Kunststoffmaterial (1a) des Grundkörpers (1) ein transparentes oder transluzentes Polypropylen umfasst oder aus einem transparenten oder transluzenten Polypropylen besteht.

5. Verfahren nach Anspruch 4, **dadurch gekennzeichnet, dass** das zweite Kunststoffmaterial (1b) des Grundkörpers (1) ein gegenüber dem ersten Kunststoffmaterial (1a) verstärktes Polypropylen umfasst oder aus einem gegenüber dem ersten Kunststoffmaterial (1a) verstärkten Polypropylen besteht.

6. Verfahren nach einem der vorstehenden Ansprüche, **dadurch gekennzeichnet, dass** die Versiegelungsschicht (10) Polyurethan umfasst oder aus Polyurethan besteht.

7. Verfahren nach einem der vorstehenden Ansprüche, **dadurch gekennzeichnet, dass** die Farbfolie (2) wenigstens einen Heizdraht oder wenigstens einen Antennendraht oder wenigstens eine elektrische Schaltung oder wenigstens eine Leuchtdiode aufweist oder, dass wenigstens eine zusätzliche Funktionsfolie vorgesehen ist, die mit der Farbfolie (2)und/oder mit dem Grundkörper (1) verbunden ist, wobei die Funktionsfolie wenigstens einen Heizdraht oder wenigstens einen Antennendraht oder wenigstens eine elektrische Schaltung oder wenigstens eine Leuchtdiode aufweist.

8. Verfahren nach einem der vorstehenden Ansprüche, **dadurch gekennzeichnet, dass** das Aufbringen der Versiegelungsschicht (10) in einem Spritzgussverfahren oder durch ein Flutungsverfahren oder durch ein Tauchverfahren oder durch ein Reaction Injection Moulding-Verfahren (RIM) erfolgt.

9. Verfahren nach einem der vorstehenden Ansprüche, **dadurch gekennzeichnet, dass** das Außenverkleidungsteil eine Stoßfängerverkleidung oder eine Türaußenverkleidung oder eine Heckklappenaußenverkleidung oder eine Kotflügelverkleidung oder ein Frontpanel oder eine Kühlerverkleidung, oder eine Schwellerverkleidung oder ein Spoiler oder ein Bestandteil einer Stoßfängerverkleidung oder einer Türaußenverkleidung oder einer Heckklappenaußenverkleidung oder einer Kotflügelverkleidung oder eines Frontpanel oder einer Kühlerverkleidung oder einer Schwellerverkleidung oder eines Spoilers ist.

## Claims

1. Method for producing a partially light-transmissive exterior trim part for a vehicle, wherein the exterior trim part has a base body (1), comprising the following steps:
- Providing a color film (2) which has at least one carrier film (2a) made of a plastic material that is transparent or translucent to visible light and a light-impermeable and color-imparting layer (2b) arranged on the carrier film (2a),
- Introducing a plurality of perforations (4) into the color film (2), wherein the perforations completely penetrate the carrier film (2a) and the color-imparting layer (2b) in order thereby to enable partial light transmissivity of the color film (2),
- Placing the color film (5) into an injection mold which has at least two mold halves (6, 7) which, in the closed state, form between them a cavity (8) defining the base body (1), wherein the color-imparting layer (2b) of the color film (2) bears against the inner wall of one of the mold halves (6) or faces the inner wall of one of the mold halves (6),
- Injecting a first plasticized plastic material (1a) forming the base body (1) into the cavity (8), wherein the first plasticized plastic material (1a) consists of a plastic material that is transparent or translucent to visible light, and injecting a second plasticized plastic material (1b) likewise forming the base body (1) into the cavity (8), wherein the plasticized plastic materials (1a, 1b) are injected in such a way that the color film (2) is back-injected in mutually different regions by the first and by the second plasticized plastic material (1a, 1b) and the two plastic materials (1a, 1b) in this case bond with the carrier film (2a) of the color film (2), wherein the plasticized plastic materials (1a, 1b) are selectively injected in such a way that only the first plasticized plastic material (1a) is pressed into the perforations (4) of the color film (2) and there forms sub-regions (9) of the base body (1),
- Applying a sealing layer (10) made of a transparent or translucent plastic material, sealing the color film (2) and the sub-regions (9).

2. Method according to claim 1, **characterized in that** introducing the perforations (4) into the color film (2) is carried out by punching, in particular by fine blanking, or by waterjet cutting or by laser beam cutting or by plasma beam cutting or by drilling or by cutting with a knife.

3. Method according to claim 1 or 2, **characterized in that** the plastic material of the carrier film (2a) of the color film (2) comprises polypropylene or consists of polypropylene.

4. Method according to one of the preceding claims, **characterized in that** the first plastic material (1a) of the base body (1) comprises a transparent or translucent polypropylene or consists of a transparent or translucent polypropylene.

5. Method according to claim 4, **characterized in that** the second plastic material (1b) of the base body (1) comprises a polypropylene reinforced relative to the first plastic material (1a) or consists of a polypropylene reinforced relative to the first plastic material (1a).

6. Method according to one of the preceding claims, **characterized in that** the sealing layer (10) comprises polyurethane or consists of polyurethane.

7. Method according to one of the preceding claims, **characterized in that** the color film (2) has at least one heating wire or at least one antenna wire or at least one electrical circuit or at least one light-emitting diode, or that at least one additional functional film is provided which is connected to the color film (2) and/or to the base body (1), wherein the functional film has at least one heating wire or at least one antenna wire or at least one electrical circuit or at least one light-emitting diode.

8. Method according to one of the preceding claims, **characterized in that** applying the sealing layer (10) is carried out in an injection molding process or by a flood coating process or by an immersion process or by a reaction injection molding process (RIM).

9. Method according to one of the preceding claims, **characterized in that** the exterior trim part is a bumper cover or an outer door trim or an outer tailgate trim or a fender trim or a front panel or a radiator trim, or a rocker panel trim or a spoiler or a component of a bumper cover or of an outer door trim or of an outer tailgate trim or of a fender trim or of a front panel or of a radiator trim or of a rocker panel trim or of a spoiler.

## Revendications

1. Procédé de fabrication d'une pièce de revêtement extérieur partiellement translucide pour un véhicule, la pièce de revêtement extérieur présentant un corps de base (1), comprenant les étapes suivantes :
- mise à disposition d'un film coloré (2) qui comporte au moins un film support (2a) en un matériau plastique transparent ou translucide à la lumière visible et une couche (2b) disposée sur le film support (2a), opaque à la lumière et conférant la couleur,
- introduction d'une pluralité de perforations (4) dans le film coloré (2), les perforations traversant entièrement le film support (2a) et la couche conférant la couleur (2b) afin de permettre ainsi une translucidité partielle du film coloré (2),
- mise en place du film coloré (5) dans un moule d'injection qui comporte au moins deux demi-moules (6, 7) qui, à l'état fermé, forment entre eux une cavité (8) définissant le corps de base (1), la couche conférant la couleur (2b) du film coloré (2) étant au contact de la paroi interne de l'un des demi-moules (6) ou faisant face à la paroi interne de l'un des demi-moules (6),
- injection dans la cavité (8) d'un premier matériau plastique plastifié (1a) formant le corps de base (1), le premier matériau plastique plastifié (1a) étant constitué d'un matériau plastique transparent ou translucide à la lumière visible, et injection dans la cavité (8) d'un second matériau plastique plastifié (1b) formant également le corps de base (1), les matériaux plastiques plastifiés (1a, 1b) étant injectés de telle sorte que le film coloré (2) soit surmoulé, dans des zones différentes les unes des autres, par le premier et par le second matériau plastique plastifié (1a, 1b) et que les deux matériaux plastiques (1a, 1b) se lient alors au film support (2a) du film coloré (2), les matériaux plastiques plastifiés (1a, 1b) étant injectés de manière ciblée de sorte que seul le premier matériau plastique plastifié (1a) soit poussé dans les perforations (4) du film coloré (2) et y forme des sous-zones (9) du corps de base (1),
- application d'une couche d'étanchéité (10) en un matériau plastique transparent ou translucide, scellant le film coloré (2) et les sous-zones (9).

2. Procédé selon la revendication 1, **caractérisé en ce que** l'introduction des perforations (4) dans le film coloré (2) est réalisée par poinçonnage, notamment par découpage fin, ou par découpe au jet d'eau ou par découpe au faisceau laser ou par découpe au faisceau plasma ou par perçage ou par découpe au couteau.

3. Procédé selon la revendication 1 ou 2, **caractérisé en ce que** le matériau plastique du film support (2a) du film coloré (2) comprend du polypropylène ou est constitué de polypropylène.

4. Procédé selon l'une des revendications précédentes, **caractérisé en ce que** le premier matériau plastique (1a) du corps de base (1) comprend un polypropylène transparent ou translucide ou est constitué d'un polypropylène transparent ou translucide.

5. Procédé selon la revendication 4, **caractérisé en ce que** le second matériau plastique (1b) du corps de base (1) comprend un polypropylène renforcé par rapport au premier matériau plastique (1a) ou est constitué d'un polypropylène renforcé par rapport au premier matériau plastique (1a).

6. Procédé selon l'une des revendications précédentes, **caractérisé en ce que** la couche d'étanchéité (10) comprend du polyuréthane ou est constituée de polyuréthane.

7. Procédé selon l'une des revendications précédentes, **caractérisé en ce que** le film coloré (2) comporte au moins un fil chauffant ou au moins un fil d'antenne ou au moins un circuit électrique ou au moins une diode électroluminescente, ou qu'au moins un film fonctionnel supplémentaire est prévu, qui est relié au film coloré (2) et/ou au corps de base (1), le film fonctionnel comportant au moins un fil chauffant ou au moins un fil d'antenne ou au moins un circuit électrique ou au moins une diode électroluminescente.

8. Procédé selon l'une des revendications précédentes, **caractérisé en ce que** l'application de la couche d'étanchéité (10) est réalisée dans un procédé de moulage par injection ou par un procédé de revêtement par inondation ou par un procédé d'immersion ou par un procédé de moulage par injection réactionnelle (RIM).

9. Procédé selon l'une des revendications précédentes, **caractérisé en ce que** la pièce de revêtement extérieur est un revêtement de pare-chocs ou un revêtement extérieur de porte ou un revêtement extérieur de hayon ou un revêtement d'aile ou un panneau avant ou un revêtement de radiateur, ou un revêtement de bas de caisse ou un spoiler, ou un composant d'un revêtement de pare-chocs ou d'un revêtement extérieur de porte ou d'un revêtement extérieur de hayon ou d'un revêtement d'aile ou d'un panneau avant ou d'un revêtement de radiateur ou d'un revêtement de bas de caisse ou d'un spoiler.
